# EUROPÄISCHE PATENTANMELDUNG

(11) **EP 2 093 524 A1**
(43) Veröffentlichungstag der Anmeldung: **26.08.2009**
(21) Anmeldenummer: 09150287.2
(22) Anmeldetag: 09.01.2009
(51) Int. Cl.: F24J 2/52, H01L 31/042, H01L 31/048

(54) **Vorrichtung zur Montage von Solarmodulen**

(30) Priorität: 19.02.2008 DE 202008002346 U
(71) Anmelder: SCHÜCO International KG, 33609 Bielefeld (DE)
(72) Erfinder: WIGGERS, Melanie, 32657, Lemgo (DE); HÖCKER, Eitel-Friedrich, 33739, Bielefeld (DE); HANKE, Carsten, 33613, Bielefeld (DE)
(74) Vertreter: Dantz, Jan Henning

(57) **Zusammenfassung**

Eine Vorrichtung zur Montage von Solarmodulen (4) an einem Bauwerk, insbesondere einem Dach, umfasst eine an einem Bauwerk festlegbare Dachschiene (3), die eine Nut (30) und eine Auflagefläche (32) aufweist, und mindestens einen in die Dachschiene (3) eingehängten Dachschienenwinkel (7), der eine Auflagefläche (21) und eine winklig dazu ausgerichtete Haltefläche (11) zum seitlichen Halten eines Solarmoduls (4) aufweist, wobei der Dachschienenwinkel (7) ein in die Dachschiene (3) einhängbares Basisteil (8) und ein mit der Haltefläche (11) versehenes Anlageteil (9) aufweist, die verstellbar aneinander gehalten sind. Dadurch kann bei der Montage des Solarmoduls (4) eine Längenverstellung des Dachschienenwinkels (7) in eine Richtung senkrecht zur Dachschiene erfolgen, was die Montage flexibel gestaltet.

## Beschreibung

Die vorliegende Erfindung betrifft eine Vorrichtung zur Montage von Solarmodulen an einem Bauwerk, insbesondere einem Dach, mit einer an einem Bauwerk festlegbaren Dachschiene, die eine Nut und eine Auflagefläche aufweist, und mindestens einen in die Dachschiene eingehängten Dachschienenwinkel, der eine Auflagefläche und eine winklig dazu ausgerichtete Haltefläche zum seitlichen Halten eines Solarmoduls aufweist.

Die DE 202 04 148 offenbart eine Vorrichtung zur Montage eines Kollektors, bei der ein Dachschienenwinkel an einer Dachschiene eingehängt wird. Hierfür ist an dem Dachschienenwinkel ein Steg ausgebildet, der in eine Nut an der Dachschiene eingreift, so dass durch das Gewicht des Dachschienenwinkels und eines daran befestigten Sonnenkollektors der Dachschienenwinkel selbstsichernd gehalten ist. Diese Vorrichtung hat sich an sich bewährt, allerdings kann es bei der Montage von Sonnenkollektoren Probleme geben, wenn der Sonnenkollektor an dem Bauwerk exakt ausgerichtet werden muss. Gerade wenn verschieden große Sonnenkollektoren eingesetzt werden, sollen diese in einer vorbestimmten Position an dem Bauwerk montiert werden können, Dabei sollen die Sonnenkollektoren statisch optimal an den jeweiligen Dachschienen gehalten werden.

Es ist daher Aufgabe der vorliegenden Erfindung eine Vorrichtung zur Montage von Solarmodulen zu schaffen, die eine einfache Ausrichtung der Position der Solarmodule ermöglicht.

Diese Aufgabe wird mit einer Vorrichtung zur Montage von Solarmodulen mit den Merkmalen des Anspruches 1 gelöst.

Erfindungsgemäß weist der Dachschienenwinkel ein in die Dachschiene einhängbares Basisteil und ein mit der Haltefläche versehenes Anlageteil auf, die verstellbar aneinander gehalten sind. Dadurch kann bei der Montage des Solarmoduls eine Längenverstellung des Dachschienenwinkels in eine Richtung senkrecht zur Dachschiene erfolgen, so dass das Solarmodul in der gewünschten Position ausgerichtet und festgelegt werden kann. Ferner lassen sich auch unterschiedlich große Solarmodule an ein und derselben Dachschiene montieren. Zudem kann eine statisch optimierte Ausrichtung der Solarmodule durch entsprechendes Verstellen des Anlageteils relativ zu dem Basisteil erfolgen.

Gemäß einer bevorzugten Ausgestaltung der Erfindung sind an dem Basisteil und dem Anlageteil ineinander greifende Profilierungen ausgebildet, die in unterschiedlichen Position ineinander fügbar sind. Dadurch kann das Verstellen des Basisteils und des Anlageteils relativ zueinander werkzeugfrei erfolgen, was die Montage vereinfacht. Dabei kann das Anlageteil selbstsichernd auf dem Basisteil angeordnet sein.

Vorzugsweise ist zum Verstellen des Basisteils und des Anlageteils ein Langloch vorgesehen, in das ein Steg eingreift, der verschiebbar an dem Langloch geführt ist. Dadurch kann das Basisteil und das Anlageteil auf einfache Weise aneinander gekoppelt werden, so dass ein versehentliches Lösen vermieden wird. Der Steg kann dabei T-förmig ausgebildet sein und mit einem verjüngten Halsabschnitt an dem Langloch geführt sein. Dabei ist es auch möglich, an einer Seite des Langloches eine Verzahnung vorzusehen, um eine Fixierung des Basisteils relativ zu dem Anlageteil zu ermöglichen.

Gemäß einer weiteren Ausgestaltung der Erfindung ist an dem Basisteil und/oder dem Anlageteil eine Verzahnung vorgesehen, die eine Fixierung in unterschiedlichen Positionen ermöglichen. Die Verzahnung kann dabei formschlüssig ineinander greifen, um nach dem Fixieren in der gewünschten Position eine weitere Verstellung zu vermeiden.

Gemäß einer weiteren Ausgestaltung ist es möglich, an dem Basisteil und dem Anlageteil senkrecht zur Verstellrichtung angeordnete Leisten und Nuten vorzusehen, die in unterschiedlichen Positionen ineinander geschoben werden können. Dann können Basisteil und Anlageteil in eine erste Richtung ineinander geschoben werden, um dann in einer fixierten Position an der Dachschiene montiert zu werden.

Die Erfindung wird nachfolgend anhand von mehreren Ausführungsbeispielen mit Bezug auf die beigefügten Zeichnungen näher erläutert. Es zeigen:
- Figur 1: eine perspektivische Explosionsdarstellung einer erfindungsgemäßem Vorrichtung zur Montage von Solarmodulen;
- Figuren 2a und 2b: zwei geschnittene Seitenansichten der Vorrichtung im montierten Zustand;
- Figuren 3a bis 3e: mehrere Ansichten eines Dachschienenwinkels;
- Figuren 4a und 4b: zwei Ansichten des Dachschienenwinkels der Figur 3 bei der Montage;
- Figuren 5a bis 5c: mehrere Ansichten einer weiteren Ausführungsform eines erfindungsgemäßen Dachschienenwinkels, und
- Figuren 6a bis 6c: mehrere Ansichten einer weiteren Ausführungsform eines Dachschienenwinkels.

Eine Solaranlage 1 wird an einem Bauwerk festgelegt, meist einem Dach, wobei an dem Dach entsprechende Dachhaken 2 festgelegt sind. An den Dachhaken 2 wird mit einem Befestigungssystem eine Solaranlage 1 fixiert, wobei hierfür mehrere quer verlaufende Dachschienen 3 vorgesehen sind. Mindestens zwei Dachschienen 3 sind parallel angeordnet und dienen zur Fixierung von plattenförmigen Solarmodulen 4, die einen Modulrahmen 5 aufweisen können.

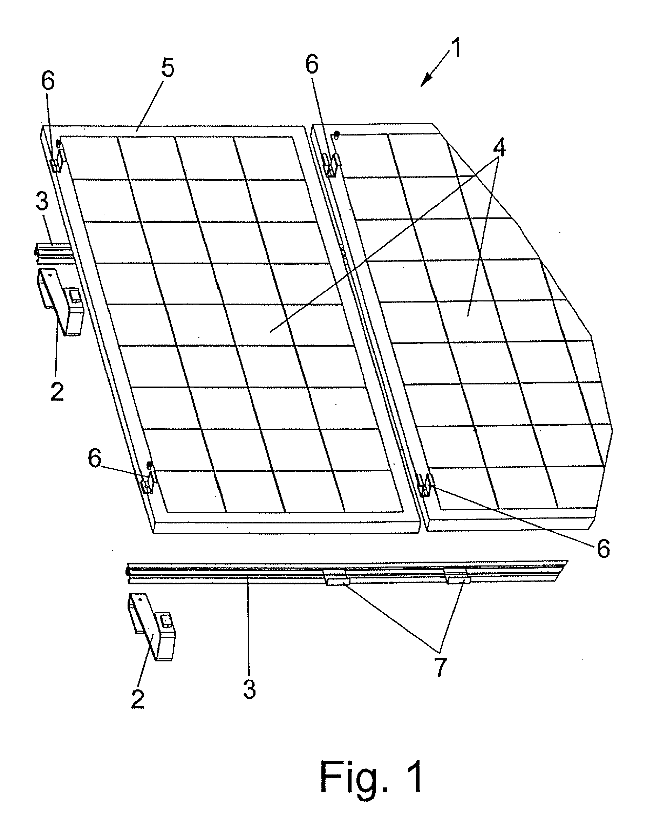

Um die Lage der Solarmodule 4 vorzugeben und um eine Abrutschsicherung bereitzustellen, befinden sich an den jeweils unteren Dachschienen 3 Dachschienenwinkel 7. Diese Dachschienenwinkel 7 werden selbstsichernd in einer Nut der Dachschiene 3 eingehängt und umgreifen eine Kante der Solarmodule 4 bzw. des Modulrahmens 5. Nachdem die Solarmodule 4 auf den Dachschienen 3 aufgelegt sind, werden diese seitlich mit Klemmen 6 fixiert. Die Klemmen 6 werden dabei mit Schrauben und Nutensteinen an bzw. in den Dachschienen 3 befestigt und halten die Solarmodule 4 kraftschlüssig. Die formschlüssige Sicherung an einem unteren Bereich übernehmen die Dachschienenwinkel 7 die in Figur 1 nur schematisch dargestellt sind.

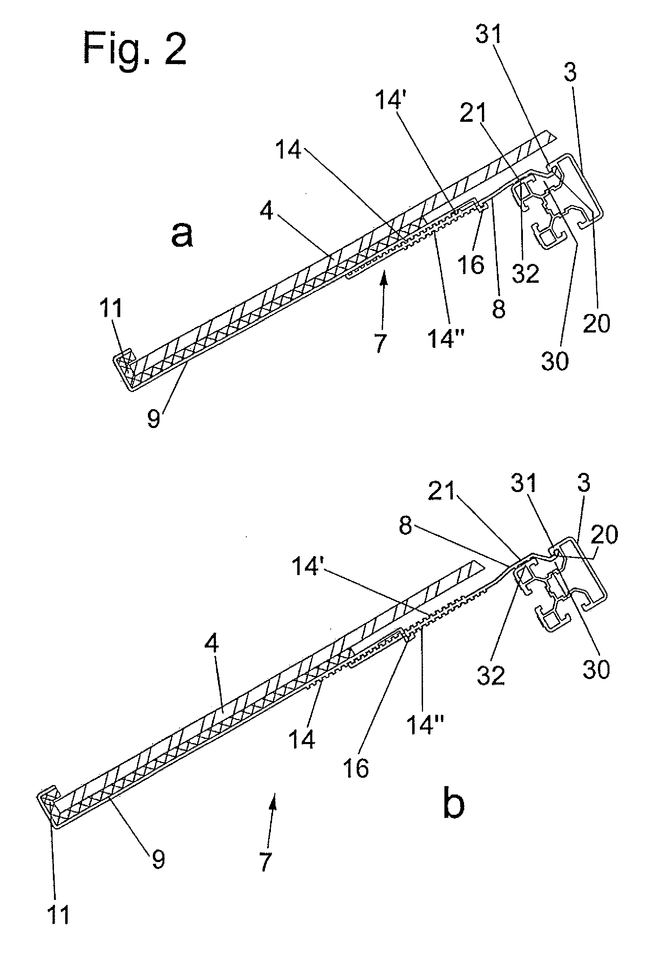

In Figur 2a ist der montierte Dachschienenwinkel 7 und die Dachschiene 3 im Detail dargestellt. Der Dachschienenwinkel 7 umfasst ein Basisteil 8, das einen Endabschnitt 20 aufweist, der in eine Nut 30 an der Dachschiene 3 eingreift. Der Endabschnitt 20 ist dabei mit einem nach oben gerichteten Steg versehen, der in eine Aufnahme eingreift, die an einem in die Nut 30 gerichteten Steg 31 ausgebildet ist. Benachbart zu der Nut 30 ist eine Auflagefläche 32 an der Dachschiene 3 ausgebildet, auf die eine Auflagefläche 21 des Basisteils 8 aufliegt. Dadurch ist das Basisteil 8 und der Dachschienenwinkel 7 selbstsichernd an der Nut 30 festgelegt.

Das Basisteil 8 ist mit einem Anlageteil 9 verbunden, das verstellbar an dem Basisteil 8 festgelegt ist. Das Anlageteil 9 umfasst auf der zur Dachschiene 3 abgewandten Seite einen U-förmigen Endabschnitt 11, der eine Haltefläche ausbildet und das plattenförmige Solarmodul 4 an einer Kante U-förmig umgreift. Dadurch wird gewährleistet, dass das Solarmodul 4 nicht nach unten abrutschen kann und sicher an dem Endabschnitt 11 gehalten ist.

Um das Basisteil 8 und das Anlageteil 9 aneinander zu fixieren, sind Profilierungen vorgesehen, die ineinandergreifen können. Eine erste Verzahnung 14 ist an einer Unterseite des Anlageteils 9 vorgesehen, während an dem Basisteil 8 an gegenüberliegenden Seiten eine obere Verzahnung 14' und eine untere Verzahnung 14" vorgesehen sind. Die obere Verzahnung 14' greift in die an der Unterseite ausgebildete Verzahnung 14 des Anlageteils 9, während in die untere Verzahnung 14" ein Steg 16 an einem Ende des Anlageteils 9 eingreift.

In Figur 2a ist der Dachschienenwinkel 7 so ausgerichtet, dass das Solarmodul 4 relativ weit oben montiert ist. In der in Figur 2b gezeigten Position wurde eine Verstellung des Anlageteils 9 relativ zu dem Basisteil 8 vorgenommen, so dass das Solarmodul 4 mit dem unteren Ende weiter von der Dachschiene 3 entfernt gehalten ist.

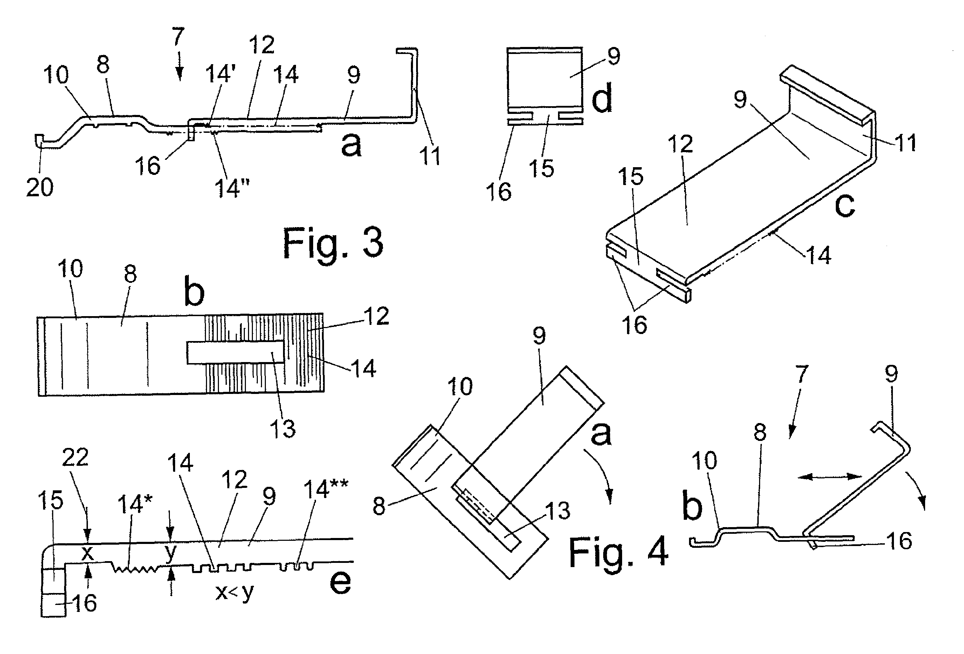

In den Figuren 3a bis 3e ist der Dachschienenwinkel 7 im Detail dargestellt. Das Basisteil 8 weist benachbart zu dem Endabschnitt 20 einen Einschwenkbereich 10 auf, damit das Basisteil 8 an der Nut 30 der Dachschiene 3 festgelegt werden kann. An dem Basisteil 8 ist ferner ein Langloch 13 ausgebildet, das rechteckförmig ausgebildet ist, und zur verschiebbaren Führung des Anlageteils 9 dient. Ferner sind am dem Basisteil 8 eine obere Verzahnung 14' und wahlweise eine untere Verzahnung 14" ausgebildet.

Das Anlageteil 9 umfasst einen U-förmig abgebogenen Endabschnitt 11 und an der gegenüberliegenden Seite einen T-förmigen Steg 15 mit einem verjüngten Halsabschnitt und zwei nach außen gerichteten Vorsprüngen 16. Zwischen dem Steg 15 und dem Endabschnitt 11 ist ein plattenförmiger Mittelabschnitt 12 gebildet, an dessen Unterseite eine Verzahnung 14 ausgebildet ist.

In Figur 3e ist das Anlageteil 9 gezeigt, wobei zwischen dem nach unten abgewinkelten Steg 15 und dem Mittelabschnitt 12 ein verjüngter Halsabschnitt 22 mit einer geringeren Dicke X vorgesehen ist. An diesen verjüngten Abschnitt 22 schließt sich der Bereich mit der Verzahnung 14 an. In Figur 3e sind verschiedene Formen von dreieckförmigen Zähnen 14*, rippenförmigen Zähnen 14 sowie Rippen mit gerundeten Enden 14** gezeigt. Die Verzahnung an der Unterseite des Anlageteils 9 kann unterschiedlich ausgebildet sein, wobei vorzugsweise ein formschlüssiges ineinandergreifen der nach unten gerichteten Verzahnung 14 mit der nach oben gerichteten Verzahnung 14' an dem Basisteil 8 erreicht wird.

Die Montage des Basisteils 8 mit dem Anlageteil 9 ist in den Figuren 4a und 4b dargestellt. Das Anlageteil 9 wird zunächst mit dem nach unten gerichteten T-förmigen Steg 15 in das Langloch 13 an dem Basisteil 8 eingefügt, und dann verschwenkt, so dass die nach außen gerichteten Vorsprünge 16 das Basisteil 8 hintergreifen. Dabei erfolgt auch ein Einrasten der Verzahnungen 14' und 14 sowie ein Hintergreifen der Vorsprünge 16 derart, dass diese an der Verzahnung 14" an dem Basisteil 8 festgelegt werden.

Zum Verstellen des Basisteils 8 relativ zu dem Anlageteil 9, kann dieses entsprechend Figur 4b auch verschwenkt und dann entlang dem Langloch 13 verschoben werden. Anschließend wird das Anlageteil 9 wieder abgesenkt, um in der gewünschten Position durch die Verzahnungen 14, 14', 14" aneinander fixiert zu werden.

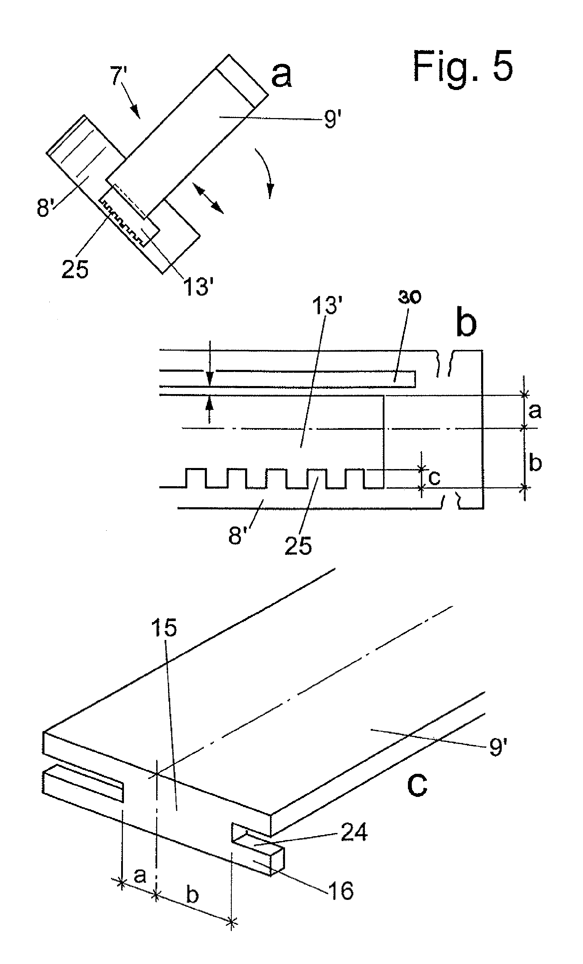

In den Figuren 5a bis 5c ist eine weitere Ausführungsform eines Dachschienenwinkels 7' gezeigt. Der Dachschienenwinkel 7' umfasst ein Basisteil 8', dass wie bei dem vorangegangenen Ausführungsbeispiel an einer Nut 30 einer Dachschiene 3 festlegbar ist. Lediglich die Fixierung eines Anlageteils 9' an dem Basisteil 8' erfolgt anders, wobei an dem Basisteil 8' ein Langloch 13' vorgesehen ist, das an einer Seite eine Verzahnung 25 aufweist. Dadurch kann das Anlageteil 9' relativ zu dem Basisteil 8' verstellt werden, in dem das Anlageteil 9' in dem Langloch 13' in die gewünschte Position verschoben wird und dann verschwenkt wird, so dass der nach unten abgekantete Steg 15 an dem Anlageteil 9' in eine Verzahnung 25 an einer Seite des Langloches 13' eingreift. In der fixierten Position greifen zwei Zähne der Verzahnung 25 in den Steg 15 und der Randabschnitt der Verzahnung 25 greift in eine Nut 24 ein, die zwischen dem nach außen gerichteten Vorsprung 16 und dem Anlageteil 9 ausgebildet ist. Ein gegenüber der Verzahnung 25 angeordneter Wandabschnitt 30 des Basisteils 8' kann dabei federnd ausgebildet sein, um ein sicheres Einschwenken und Positionieren zu ermöglichen.

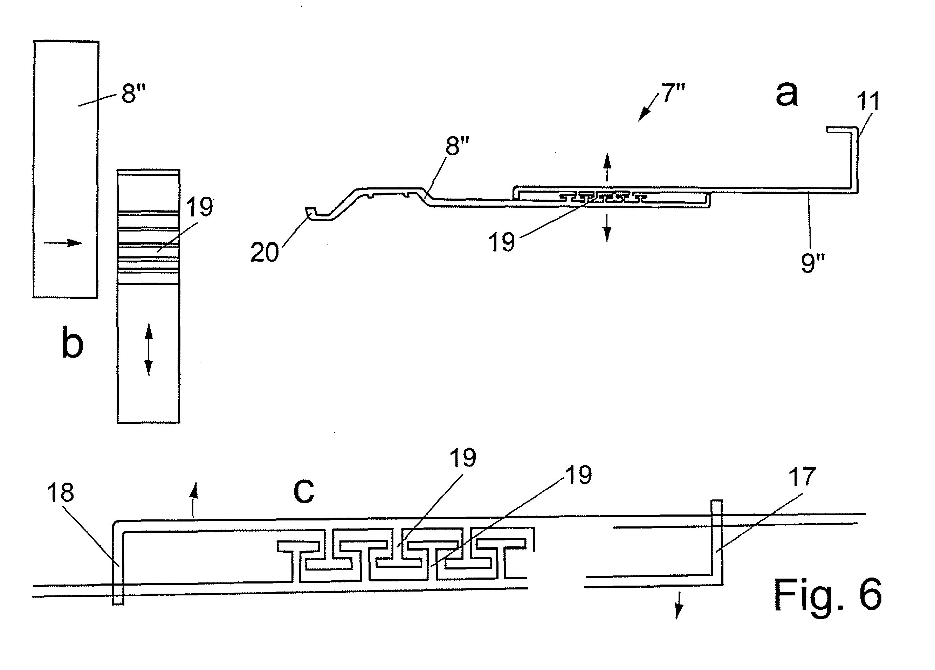

In den Figuren 6a bis 6c ist eine weitere Ausführungsform eines erfindungsgemäßen Dachschienenwinkels 7" gezeigt. Das Basisteil 8" weist wiederum einen Endabschnitt 20 auf, der wie bei den vorangegangenen Ausführungsbeispielen an einer Nut 30 einer Dachschiene 3 festlegbar ist. Zur Fixierung eines Anlageteils 9" an dem Basisteil 8" sind an der Unterseite des Anlageteils 9" und der Oberseite des Basisteils 8" T-förmige Stege 19 ausgebildet, die ineinander fügbar sind, wie dies insbesondere in Figur 6c dargestellt ist. Dadurch können Basisteil 8" und Anlageteil 9" seitlich ineinander geschoben werden und sind dann in der Länge nicht mehr verstellbar. Die Stege 19 können jedoch an unterschiedlichen Positionen ineinander geschoben werden, so dass dadurch eine Längenverstellung des Dachschienenwinkels 7" möglich ist.

Das Basisteil 8" umfasst dabei einen endseitigen Steg 17, der mit Übermaß ausgebildet ist, so dass beim Einschieben der Stege 19 ineinander eine gewisse Verspannung erfolgt, was zu einer klemmenden Fixierung des Basisteils 8" und des Anlageteils 9" führt. Gleichermaßen ist an einem Ende des Anlageteils 9" ein zu dem Basisteil 8" gewandter Steg 18 ausgebildet, der ebenfalls mit Übermaß vorgesehen ist, so dass beim Einschieben der Stege 19 ineinander das Basisteil 8" und das Anlageteil 9" etwas gebogen werden müssen, was eine klemmende Fixierung gewährleistet.

In den vorangegangenen Ausführungsbeispielen, können Basisteil 8 und Anlageteil 9 werkzeugfrei aneinander montiert werden, wobei eine Längenverstellung durch entsprechendes Schwenken bzw. Schieben möglich ist. Dabei können verschiedene Rast- und Haltemittel eingesetzt werden. Die Längenverstellung kann somit auch noch auf der Baustelle erfolgen.

## Patentansprüche

1. Vorrichtung zur Montage von Solarmodulen (4), an einem Bauwerk, insbesondere einem Dach, mit einer an einem Bauwerk festlegbaren Dachschiene (3), die eine Nut (30) und eine Auflagefläche (32) aufweist, und mindestens einem in die Dachschiene (3) eingehängten Dachschienenwinkel (7), der eine Auflagefläche (21) und eine winklig dazu ausgerichtete Haltefläche (11) zum seitlichen Halten eines Solarmoduls (4) aufweist, **dadurch gekennzeichnet, dass** der Dachschienenwinkel (7) ein in die Dachschiene (3) einhängbares Basisteil (8, 8', 8") und ein mit der Haltefläche (11) versehenes Anlageteil (9, 9', 9") aufweist, die verstellbar aneinander gehalten sind.

2. Vorrichtung nach Anspruch 1, **dadurch gekennzeichnet, dass** an dem Basisteil (8, 8', 8") und dem Anlageteil (9, 9', 9") ineinander greifende Profilierungen (14, 14', 14", 19) ausgebildet sind, die in unterschiedlichen Positionen ineinander fügbar sind.

3. Vorrichtung nach Anspruch 1 oder 2, **dadurch gekennzeichnet, dass** das Anlageteil (9) selbstsichernd auf dem Basisteil (8) angeordnet ist.

4. Vorrichtung nach einem der Ansprüche 1 bis 3, **dadurch gekennzeichnet, dass** zum Verstellen des Basisteils (8) und des Anlageteils (9) ein Langloch (13) vorgesehen ist, in das ein Steg (15) eingreift, der verschiebbar an dem Langloch (13) geführt ist.

5. Vorrichtung nach Anspruch 4, **dadurch gekennzeichnet, dass** der Steg (15) T-förmig ausgebildet ist und mit einem verjüngten Halsabschnitt an dem Langloch (13) geführt ist.

6. Vorrichtung nach einem der Ansprüche 1 bis 5, **dadurch gekennzeichnet, dass** an dem Basisteil (8) und/oder dem Anlageteil (9) eine Verzahnung (14, 14', 14") vorgesehen ist, die ein Fixieren in unterschiedlichen Positionen ermöglicht.

7. Vorrichtung nach einem der Ansprüche 1 bis 6, **dadurch gekennzeichnet, dass** an dem Basisteil (8") und dem Anlageteil (9") senkrecht zur Verstellrichtung angeordnete Leisten (19) und Nuten vorgesehen sind, die in unterschiedlichen Positionen ineinander geschoben werden können.

8. Vorrichtung nach einem der Ansprüche 1 bis 7, **dadurch gekennzeichnet, dass** an einer Seite des Langloches (13) eine Verzahnung (25) ausgebildet ist.

9. Vorrichtung nach einem der Ansprüche 1 bis 8, **dadurch gekennzeichnet, dass** das Anlageteil (9) einen Endabschnitt (11) aufweist, der eine Kante eines Solarmoduls U-förmig umgreift.

10. Vorrichtung nach einem der Ansprüche 1 bis 9, **dadurch gekennzeichnet, dass** das Basisteil (8) und/oder das Anlageteil (9) als gebogene Metallbleche ausgebildet sind.

11. Vorrichtung nach einem der Ansprüche 1 bis 9, **dadurch gekennzeichnet, dass** das Basisteil (8) und/oder das Anlageteil (9) als geschnittene und gestanzte Strangpressprofile ausgebildet sind.
